# EUROPÄISCHE PATENTSCHRIFT

(11) **EP 1 903 415 B1**
(45) Veröffentlichungstag und Bekanntmachung des Hinweises auf die Patenterteilung: **19.08.2009**
(21) Anmeldenummer: 07017364.6
(22) Anmeldetag: 05.09.2007
(51) Int. Cl.: G05D 7/01

(54) **Vorrichtung zur Mengenbegrenzung**
Device for flow limitation
Dispositif pour limiter le débit

(30) Priorität: 21.09.2006 DE 102006045063
(43) Veröffentlichungstag der Anmeldung: 26.03.2008
(73) Patentinhaber: Behr, Peter, 70567 Stuttgart (DE)
(72) Erfinder: Behr, Peter, 70567 Stuttgart (DE)
(74) Vertreter: Blickle, K. Werner

(56) Entgegenhaltungen:
- EP-A- 0 309 643
- FR-A- 875 861
- JP-A- 2005 202 903
- US-A- 1 925 301
- US-A- 4 624 277

## Beschreibung

Zum Einbau in ein Ventilgehäuse vorgesehene Vorrichtung zur Mengenbegrenzung, für den Heizungsbereich vorgesehenes Thermostatventil sowie für den Sanitärbereich vorgesehenes Vorabsperrventil.

Die Erfindung betrifft eine zum Einbau in ein Ventilgehäuse vorgesehene Vorrichtung zur Mengenbegrenzung von das Ventilgehäuse von einem Zulauf zu einem Ablauf durchströmendem Medium, insbesondere Wasser, innerhalb eines hinsichtlich Durchflussmenge und Differenzdruck vorgegebenen Arbeitsbereichs, mit einer Ventilspindel und einem Ventilkegel, der unter Ausrichtung auf einen im Ventilgehäuse vorgesehenen Ventilsitz auf diesen zu- und wegbewegbar ist, und mit einer mit der Ventilspindel gekoppelten Einrichtung zur Messung des Differenzdrucks. Die Erfindung betrifft des weiteren ein für den Heizungsbereich vorgesehenes Thermostatventil, das solch eine Vorrichtung zur Mengenbegrenzung enthält sowie ein für den Sanitärbereich vorgesehenes Vorabsperrventil, welches zu der vom Differenzdruck unabhängigen Mengenbegrenzung eine erfindungsgemäße Vorrichtung enthält.

Für Heizungsanlagen vorgesehene raumtemperaturgesteuerte Thermostatventile sind, entsprechend dem derzeitigen Standard, als Proportionalregler mit einer vorgegebenen Regelabweichung (P-Bereich), in der Regel eins bis zwei Grad Kelvin, auszulegen. Je nach Ausführung können diese mit einer Festdrossel zur Begrenzung der maximalen Durchschussmenge ausgerüstet sein. Um die über eine Festdrossel begrenzte maximale Durchflussmenge einzuhalten ist dabei ein konstanter Vordruck vor der Festdrossel erforderlich. Überschreitungen von 50% und mehr sind damit nicht zu vermeiden. Im Standardfall, also ohne integrierte Festdrossel, ist die Anpassung des Ventils an die berechnete Durchflussmenge nur in einer recht großen und daher ungenügenden Abstufung möglich. Dabei wird die Begrenzung üblicherweise über eine voreinstellbare Rücklaufverschraubung vorgenommen.

Aus der US-A-1 925 301 ist ein indirekt über eine Hydraulikleitung gesteuertes Regelventil mit Sollwerteinstellung bekannt. Im Anwendungsfall ist der auf ein Pilotventil wirkende Steuerdruck in der Hydraulikleitung abhängig von der Füllhöhe eines Boilers, der mit Wasser befüllt werden soll. In Abhängigkeit von der Höhe des Steuerdrucks öffnet oder schließt das Pilotventil, was zu einer entsprechenden Aktion eines Hauptventils führt. Eine von außerhalb des Ventilgehäuses zugängliche Voreinstellung bewirkt lediglich eine zusätzliche Vorspannung zum Schließen des Pilotventils, wobei der Durchfluss nur innerhalb der Grenzen geregelt wird, welche durch den Differenzdruck und den kv-Wert bestimmt sind. Die bekannte Voreinstellung leistet keinerlei Beitrag zu einer absoluten Mengenbegrenzung des Durchflusses bei beliebigen Differenzdrücken zwischen Eingang und Ausgang des Hauptventils. Für den Fachmann ist klar, dass sich ein Einbau solch eines bekannten Ventilaufbaus in einen recht klein bauenden Ventilkörper eines Thermostatventils verbietet, dass die Kosten dafür enorm hoch wären und dass sich solch ein Aufbau keinesfalls mit den für ein Thermostatventil üblichen thermischen und elektronischen Antrieben einsetzen ließe.

Aus der Zusammenfassung der JP-A-2005 202903 ist ein reines Druckminderventil bzw. ein reiner Differenzdruckregler mit einem aus mehreren Membranen bestehenden Drucksensor bekannt. Mit diesem Druckminderventil ist lediglich der Hinterdruck, nicht jedoch die Durchflussmenge einstellbar, geschweige denn begrenzbar.

Aus der FR-A-875 861 ist ein reines Sicherheitsventil bekannt, welches anstelle eines federbelasteten Ventilkegels eine durch den Vordruck gesteuerte Membran aufweist. Das Ventil öffnet in Anbetracht der unterschiedlichen Reaktionsflächen zwischen der Membran und dem Ventilsitz immer dann, wenn ein bestimmter Überdruck vorhanden ist. Damit eignet sich diese bekannte Sicherheitsventil weder als Mengenbegrenzer noch als Regelventil für einen bei Thermostatventilen üblichen Ventilantrieb.

Das aus der US-A-4 624 277 bekannte Ventil dient nicht einer stetigen Regelung über einen Ventilantrieb, es liegt vielmehr eine ungewöhnliche Sonderform eines Überstromventils vor. Durch die vorgesehene Federvorspannung ist eine Druckbegrenzung möglich. Über eine Rückführung des inneren Drucks eines Faltenbalgs kann der gewünschte Hinterdruck des Ventils zusätzlich beeinflusst werden. Das Ventil ist geeignet, mit einem Regelventil versehene Verbraucher auf eine konstante Differenzdrucksituation einzustellen. Dies dient im Allgemeinen der Verbesserung des Regelverhaltens. Eine vom Differenzdruck unabhängige Mengenbegrenzung bei variabler Stellung des Ventilkegels ist mit diesem bekannten Ventilaufbau nicht erreichbar.

Aus der EP0309643 ist eine in einem Schließkörper eingebautes Druckmesselement bekannt, auf das der Differenzdruck zwischen einer Einlasskammer und einer Auslasskammer einwirkt. Der hierbei gemessene Differenzdruck dient nicht der unmittelbaren Verstellung einer Ventilspindel, sondern als Steuersignal für einen Rechner, welcher das Drosselorgan mit elektrischer Hilfsenergie betätigt. Das bekannte Verfahren dient grundsätzlich nicht der Mengenbegrenzung auf einen mechanisch eingestellten Festwert und beschreibt im übrigen ein aufwendiges elektronisches Messsystem, welches aus Kostengründen nicht für den Masseneinsatz an jedem Heizkörper einer Heizungsanlage verwendet werden kann.

Der Gegenstand der DE3623814 hat über die Veränderung des Systemdrucks im Heizungssystem eine zentral beeinflussbare Nachtabsenkung zum Ziel. Der Differenzdruck wird beim Durchströmen des Ventils weder gemessen noch berücksichtigt. Auch ist keine voreinstellbare Mengenbegrenzung vorgesehen.

Aus der DE19944366 ist schließlich ein Ventil bekannt, dessen Messteil, auch bei Einsatz eines Faltenbalgs, seinen Stellinpuls aus den unterschiedlichen Größen der Wirkflächen unterhalb und oberhalb des Ventilkegels bezieht. Der Faltenbalg ersetzt also nur die reibungsbehaftete zweite Dichtebene der Ausführungsform ohne Faltenbalg. Die differenzdruckausgleichende Wirkung ist demnach auf das Flächenverhältnis der Wirkflächen oberhalb und unterhalb des Ventilkegels beschränkt. Die in der neusten Energieeinsparverordnung (EnEV) geforderten Werte bezüglich der Durchflussbegrenzung sind hier nicht optimal umgesetzt. Auch ist nicht erkennbar, wie das bekannte Ventil nach vollständigem Schließen durch außerhalb des normalen Regelbereichs liegenden Differenzdruck überhaupt wieder öffnen kann. Es kann nämlich nicht vorausgesetzt werden, dass der Vordruck in der Einströmseite des Ventils absinkt.

Die zum Stand der Technik gehörenden Mischventile für den Sanitärbereich, bei den es sich insbesondere um Ein- und Zweigriffmischbatterien handelt, reagieren auf schwankende Drücke in den Versorgungsleitungen für Kalt- und Warmwasser mit schwankenden Mischtemperaturen. Dies tritt vorwiegend gerade bei korrekt dimensionierten, weniger bei überdimensionierten Rohrsystemen auf. Dabei hängt es jeweils davon ab, ob die Kalt- oder Warmwasserleitung stärker belastet wird und ob dies zu unterschiedlichen, von der Auslegung abweichenden Entnahmemengen führt. Ein konstant gleicher Vordruck in der Kalt- und Warmwasserversorgungsleitung ist dabei nicht gewährleistet.

Der Erfindung liegt die Aufgabe zugrunde, eine zum Einbau in ein Ventilgehäuse vorgesehene Vorrichtung zur Mengenbegrenzung von das Ventilgehäuse von einem Zulauf zu einem Ablauf durchströmendem Medium bereit zu stellen, bei der die Mengenbegrenzung auf einem konstanten Wert/Durchflusswert erfolgt und zwar unabhängig vom Vor- bzw. Differenzdruck am Thermostatventil bzw. am Mischventil. Dabei soll diese Vorrichtung die Forderungen der EnEV besser erfüllen, als der Stand der Technik, zuverlässig sein und ohne zusätzlichen großen Kostenaufwand für neue Ventile zum Einsatz kommen können. Sie soll jedoch auch für den Fall einer Reparatur, insbesondere jedoch für eine Nachrüstung im Hinblick auf die neusten Energieeinsparverordnungen (EnEV) kostengünstig und ohne die Notwendigkeit eines Umbaus des Ventilgehäuses verfügbar sein.

Diese Aufgabe ist gemäß dem vorliegenden Anspruch 1 gelöst. Anders als beim Stand der Technik ist bei der erfindungsgemäßen Ausführungsform eine Voreinstellung zur Begrenzung der maximalen Durchflussmenge und zwar unabhängig von der Stellung des Ventils vorgesehen. Solche eine Durchflussbegrenzung wird in der EnEV gefordert. Letztere lässt sich durch die erfindungsgemäße Mengenbegrenzung unabhängig vom Differenzdruck wirkungsvoller umsetzen als beim Stand der Technik. Auch ermöglicht diese Voreinstellung den Ersatz sonst üblicher Drosselorgane. Gemäß der Erfindung kommt dabei eine die Ventilspindel mit dem Ventilkegel koppelnde Kapselfeder mit linearer Charakteristik zur Anwendung. Ist der innere Druck in der Kapselfeder höher als der äußere, dann dehnt sich die Kapselfeder aus und verkürzt den zur Verfügung stehenden Ventilhub. Durch die Verkürzung des Ventilhubes erhöht sich der Durchflusswiderstand des Ventils, d.h. der kv-Wert des Ventils wird kleiner. Dieser Vorgang erfolgt linear, d.h. parallel zur Veränderung des Differenzdrucks, entsprechend der Charakteristik der Kapselfeder. Der Einsatz einer Kapselfeder macht eine separate Rückholfeder, wie bei bekannten Systemen, überflüssig. Da solche Kapselfedern eine geringe Dicke von nur ca. 2 mm besitzen, ist die differenzdruckunabhängige Mengenbegrenzung in einem Standard-Ventilgehäuse eines Heizkörperventils ohne Veränderung des selben unterzubringen. Dies macht auch die Nachrüstung von bereits eingebauten Ventilen mit Mengenbegrenzung möglich. Schließlich verhindert eine Hubbegrenzung der Kapselfeder das Blockieren des Ventils in geschlossener Stellung bei höherem als dem maximal vorgesehenen Differenzdruck. Das geöffnete Ventil kann auch über den gewählten Betriebsbereich hinaus nicht selbsttätig schließen. Bei einer weiteren Ausführungsform ist dieser Resthubwert vorzugsweise auf einen Betrag von ca. 0,1 mm sichergestellt. Diese Begrenzung dient gleichzeitig zur Übertragung der Federkraft (Rückstellkraft) bei Thermostatventilen, bzw. dem über die Ventilspindel ausgeübten Öffnungsmoment. Sie gewährleistet im übrigen die Funktion des Ventils mit thermostatischem Antrieb bis zur Obergrenze des Einsatzbereichs.

Bei einer weiteren vorteilhaften Ausführungsform gemäß der Erfindung wird durch ein Druckausgleichsrohr das Innere der Kapselfeder mit dem Druck auf der Zulaufseite des Ventils beaufschlagt. Ein besonderer Vorteil ergibt sich durch den entstehenden Druckausgleich für den Ventilkegel. Der Druck über und unter dem Ventilkegel ist gleich. Es wirkt daher keine zusätzliche Kraft auf die Kapselfeder.

Zur Einstellung der maximalen Durchflussmenge wird gemäß einer weiteren Ausführungsform der Erfindung der Spindelhub variiert. Die Verbindung der Kapselfeder mit der Spindel erfolgt dabei mit einer Schraube, welche an der Kapselfeder befestigt, insbesondere angelötet ist. Zur Aufnahme der Schraube findet sich in der Ventilspindel eine entsprechende Gewindebohrung. Durch Verdrehen der Ventilspindel von außen wird durch die starr mit der Kapselfeder verbundene Schraube der Abstand zwischen der Ventilspindel und der Kapselfeder verkleinert bzw. vergrößert. Ein Anschlag verhindert dabei erfindungsgemäß ein Mitdrehen der Kapselfeder. Damit kann die zulässige Durchflussmenge des Mediums, insbesondere die Wassermenge, direkt auf den untersten Wert des vorgesehenen Differenzdruckbereichs eingestellt werden. Bei steigendem Differenzdruck schließt das Ventil zunehmend und hält damit die Durchflussmenge konstant. Die Abhängigkeiten ergeben sich dabei aus dem vom Ventilhersteller ermittelten kv-Wert.

Bei einem höheren als dem geringsten Differenzdruckbereich beginnt sich die Kapseifeder auszudehnen und damit den Abstand zwischen Ventilkegel und Ventilsitz zu verkleinern. Für den gewählten Differenzdruckbereich ist daher die Federkonstante aus dem maximalen Differenzdruckunterschied berechnet.

Die zuvor beschriebene Funktion beeinträchtigt eine automatische Steuerung des Ventils nicht. Die Regelabweichung (Proportionalbereich) wird lediglich verkleinert.

Gemäß einem weiteren Ausführungsform der Erfindung kann die Voreinstellung der Durchflussmenge von außen mittels eines Spezialschlüssels mit Einstellskala erfolgen.

Bei Thermostatventilen beträgt der nutzbare Hub des Ventils in der Regel 0,44 mm für eine Regelabweichung von zwei (K). Bei steigenden Differenzdrücken wird diese Regelabweichung kleiner. Die zu begrenzende Menge an Medium, insbesondere Wasser, bleibt konstant, weil der kv-Wert des Ventils dem sich ändernden Differenzdruck angepasst wird.

Bei einer Anwendung der erfindungsgemäßen Vorrichtung im Heizungsbereich sind durch eine stärkere Begrenzung des Hubs der Kapselfeder bei höheren Differenzdrücken und der zulässigen Regelabweichung von zwei (K) entsprechend größere kv-Werte und damit höhere Durchflussmengen möglich. Mit steigendem Differenzdruck wird dabei die Regelabweichung kleiner. Die Regelfunktion des Ventilantriebs wird durch den Einsatz der erfindungsgemäßen Vorrichtung nicht geändert. Dabei erfüllt die Vorrichtung gemäß der Erfindung die Forderung nach hydraulischem Abgleich in den hier einschlägigen Normen, insbesondere der DIN V 4701-10, besser, als dies mit rein mechanischen Drosseln möglich ist. Da sich die kv-Werte automatisch der Durchflussmenge, vom Vordruck abhängig, anpassen und deshalb nur die am höchsten belasteten Ventile den maximal zulässigen kv-Wert bei einer Regelabweichung von zwei (K) erreichen, die überwiegende Zahl der Ventile jedoch deutlich kleinere Regelabweichungen verursachen, kann ohne Verbrauchsnachteile eine Auslegungsgrenze von zwei (K) zugrunde gelegt werden.

Bei dem erfindungsgemäßen Thermostatventil wird immer mit der kleinstmöglichen Regelabweichung geregelt, so dass sich hier automatisch die energetisch günstigste Betriebsweise ergibt (siehe DIN 4701-10). Bei der Festlegung der Bewertungszahl gemäß DIN 4701-10 kann der günstigere Faktor für ein (K) Regelabweichung eingesetzt werden.

Beiden Anwendungsbereichen der erfindungsgemäßen Vorrichtung im Heizungs- bzw. Sanitärbereich ist gemeinsam, dass sie sich ohne jegliche erforderliche Änderung an den herkömmlichen Ventilgehäusen einbauen und, was insbesondere auch interessant ist, nachrüsten lassen. D.h., die Vorrichtung eignet sich um Einbau in ein Standard-Thermostatventil bei Anwendung im Heizungsbereich oder in ein Standard-Vorabsperrventil im Sanitärbereich. Durch die Möglichkeit der Nachrüstung lassen sich bestehende Heizungsanlagen bzw. Sanitärausrüstungen auf den neusten, energetisch optmierten Stand bringen.

Wie zuvor bereits erwähnt sind die erfindungsgemäßen Grundfunktionen beim Einsatz der vom Differenzdruck unabhängigen Mengenbegrenzung gemäß der Erfindung im Sanitärbereich gleich. Hierbei wird die Ventilspindel auf den Bereich des erforderlichen kv-Wertes beim kleinsten Differenzdruckbereich blockiert, so dass ein weiteres öffnen des Ventils von Hand nicht möglich ist. Bei steigendem Differenzdruck verkleinert die Druckmess-Einrichtung den Hub der Ventilspindel ohne sie jedoch gänzlich zu schließen, was durch die Voreinstellung der Hubbegrenzung verhindert wird. Es ist deshalb erforderlich, Handabsperrventile als Vorregulierventile immer vollständig bis zum Anschlag zu öffnen. Für die Voreinstellung der Mengenbegrenzung ist die Wahl des Arbeitsbereiches ausschlaggebend, wie zum Beispiel Vordruck 3,5 bar, Hinterdruck 1,0 bar. Bei der Anwendung der erfindungsgemäßen Vorrichtung im Sanitärbereich wird die Ausdehnung der Kapselfeder auf den verbleibenden Ventilhub abzüglich eines Mindestspiels von ca. 0,1 mm begrenzt.

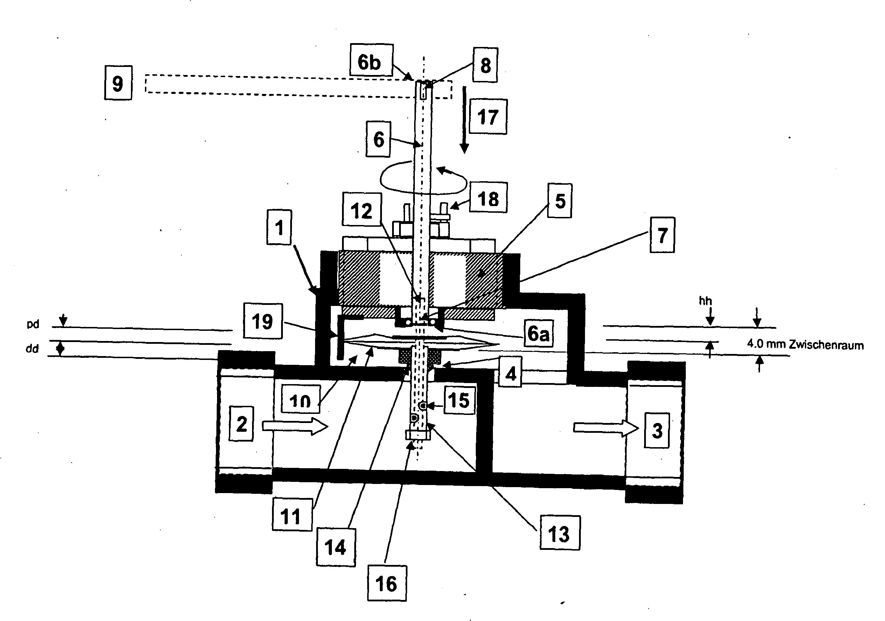

Nachfolgend wird die Erfindung anhand eines in der einzigen Figur dargestellten Ausführungsbeispiels gemäß der Erfindung näher erläutert. Die einzige Figur zeigt einen schematischen Schnitt durch ein Standard-Thermostatventil, in das die erfindungsgemäße Vorrichtung eingebaut ist.

Das Thermostatventil gemäß einer bevorzugten Ausführungsform besitzt ein Ventilgehäuse 1 mit einem Zulauf 2 und einem Ablauf 3. Im Zulauf 2 herrscht ein Druck von 50 bis 1000 mbar, während im Ablauf ein Druck zwischen 0 und 950 mbar herrscht. Im zulaufseitigen Abschnitt des Ventilgehäuses 1 befindet sich ein Ventilsitz 4. Im oberen Teil des Ventilgehäuses 1 ist ein Einsatz 5 einer Vorrichtung zur Mengenbegrenzung vorgesehen, in welchem eine Ventilspindel 6 zentral, in axialer Richtung und unter Ausrichtung zum Ventilsitz 4 gelagert ist. Die Ventilspindel 6 besitzt ein dem Ventilsitz 4 zugekehrtes unteres Ende 6a sowie ein davon abgekehrtes oberes Ende 6b. Im unteren Ende ist eine zentrale Gewindebohrung 7 vorgesehen, während im oberen Ende 6b eine Aufnahme 8 für einen Verstellschlüssel 9 vorgesehen ist.

Eine Vorrichtung zur Mengenbegrenzung von das Ventilgehäuse 1 vom Zulauf 2 zum Ablauf 3 durchströmendes Medium, hier Wasser, weist eine Einrichtung 10 zur Messung des Differenzdrucks auf. Anders als beim Stand der Technik besteht diese Einrichtung 10 nicht aus einer Membran, sondern aus einer Kapselfeder 11 mit linearer Charakteristik, die eine Mengenbegrenzung auf einen konstanten Wert, unabhängig vom Vor- bzw. Differenzdruck am Thermostatventil ermöglicht. Zur Einstellung der zulässigen Durchflussmenge ragt durch die Kapselfeder 11 hindurch zentral und in axialer Richtung eine 2 mm Gewindeschraube 12 mit einer Gewindesteigung von 0,5 mm. Das obere Ende der Gewindeschraube 12 ist mit dem unteren Ende 6a der Ventilspindel 6 verbunden und zwar durch Aufnahme in der zentralen Gewindebohrung 7, die im vorliegenden Fall eine Länge von 10 mm besitzt. Auf der dem Ventilsitz 4 zugekehrten unteren Fläche der Kapselfeder 11 ist unter mittiger, axialer Ausrichtung ein Druckausgleichsrohr 13 angelötet, welches durch den Ventilkegel 14 sowie den Ventilsitz 4 hindurchragt und sich bis in den Zulauf 2 erstreckt. Das Druckausgleichsrohr 13 besitzt beispielsweise eine lichte Weite von 3 mm und weist wenigstens eine, vorzugsweise zwei, im wesentlichen senkrecht zur Innenbohrung des Druckausgleichsrohrs 13 verlaufende Druckausgleichsbohrungen 15 der Größe 15 mm auf. Damit herrscht im Inneren der Kapselfeder 11 der zulaufseitige Vordruck Zur Begrenzung der Ausdehnung der Kapselfeder 11 verläuft die Gewindeschraube 12 im Inneren des Druckausgleichsrohrs 13 derart weiter, dass ihr freies unteres Ende über die Stirnfläche des Druckausgleichsrohrs 13 vorsteht, so dass darauf eine gegen Verdrehen gesicherte Mutter 16 unter Anlage an der Stirnfläche des Druckausgleichsrohrs 13 befestigbar ist.

Der Ventilkegel 14 ist weichdichtend ausgeführt und auf der Unterseite der Kapselfeder 11 entweder axial aufgeklebt oder aufvulkanisiert.

Der Hub der Ventilspindel 6 ist über den thermischen Antrieb 17 begrenzt. Vorzugsweise ist der Hub dabei auf maximal 0,44 mm begrenzt. Die Durchflussmenge des Mediums ist durch Verdrehen der Ventilspindel 6 einstellbar. Dabei wird der Verstellschlüssel 9 in Eingriff mit der Aufnahme 8 am oberen Ende 6b der Ventilspindel 6 gebracht. Ein Anschlag 18 verhindert dabei, dass die Ventilspindel 6 um mehr als eine Umdrehung, z.B. um mehr als 245 Grad gedreht werden kann. Gleichzeitig sorgt ein Anschlag 19 dafür, dass sich bei diesem Einstellvorgang die Kapselfeder 11 mitdrehen kann.

Die Ausdehnung der Kapselfeder 11 ist auf den vorgegebenen Regelbereich, insbesondere auf maximal 0,34 mm begrenzt. Diese Hubhöhe ist mit hh (Dichtung 2 mm) in der Figur bezeichnet. Mit dd ist die Dichtungsdicke ohne Stützscheibe, hier 2,0 mm bezeichnet, während mit pd die Plattenfederdicke bezeichnet ist, die ohne Dichtung 3,56 mm und maximal ohne Dichtung 3,9 mm beträgt.

Bei dem Ventilgehäuse 1 kann es sich zum Beispiel um das Ventilunterteil des Ventils "Standard" der Theodor Heimeier Metallwerk GmbH in 59592 Erwitte handeln, während die Kapselfeder 11 aus dem Sortiment der Druckmesselemente mit linearer Charakteristik der Beck GmbH in 70567 Stuttgart ausgesucht sein kann. Diese hat vorzugsweise einen max. äußeren Durchmesser von 16 mm.

Die Mengenbegrenzung erfolgt auf konstantem Wert, unabhängig vom Vor- bzw. Differenzdruck am Thermostatventil. Dabei ist sichergestellt dass die Mengenbegrenzungsvorrichtung auch bei höheren Drücken das Ventil nicht gänzlich schließen kann, sondern das stets ein Resthub von 0,1 mm verbleibt. Dieser Resthub von 0,1 mm entspricht einer Regelabweichung von 2 (K) des Ventils bei einem Differenzdruck von ca. 900 mbar. Dabei kann dieser Wert abhängig von der Form des Ventilssitzes sowie des Ventilkegels (fabrikatsabhängig) angepasst werden. Durch eine stärkere Begrenzung des Hubs der Kapselfeder 11 bei höheren Differenzdrücken von der zulässigen Regelabweichung von 2 (K) sind entsprechend größere kv-Werte und damit höhere Durchflussmengen möglich. Dank der erfindungsgemäßen Vorrichtung wird mit steigendem Differenzdruck die Regelabweichung kleiner.

Für die Anwendung der erfindungsgemäßen Vorrichtung im Heizungsbereich, insbesondere in dem zuvor beschriebenen optimierten Thermostatventil, bedeutet dies, dass die Forderung nach hydraulischem Abgleich in den einschlägigen Normen besser erfüllt ist als dies mit rein mechanischen Drosseln möglich wäre. Die Regelabweichung (P-Bereich) kann durch eine Erhöhung des Vordrucks bzw. zentral des gesamten Anlagendrucks verkleinert werden. Die für die Berechnung der Anlagenaufwandszahl nach DIN V 4701-10 relevante Regeldifferenz führt dann zu etwas günstigeren Verbrauchswerten. Es erfolgt eine automatische Anpassung des kv-Wertes des Ventils entsprechend der einzustellenden maximalen Durchflussmenge. Eine Ventilauslegung mit Hilfe eines Mengen-/Druckdiagramms ist nicht mehr erforderlich. Der kv-Wert ist ausschließlich abhängig vom zur Verfügung stehenden Differenzdruck und der eingestellten Durchflussmenge. Dadurch wird eine stark vereinfachte Auswahl des geeigneten Ventils ermöglicht. Die maximale Durchflussmenge kann mittels des Verstellschlüssels 9 direkt am Ventil eingestellt werden. Der Differenzdruckbereich spielt dabei innerhalb der Bereichsgrenzen von ca. 50 bis 1000 mbar keine Rolle. Erweiterte Druckbereiche sind möglich. Änderungen des Vordrucks und Vordrucksschwankungen werden vom Ventil selbständig ausgeglichen. Ungenauigkeiten bei der Auslegung des vorgeschalteten Rohrnetzes werden innerhalb des gesamten Druckbereichs von etwa 50 bis 1000 mbar kompensiert. Ein rechnerischer Nachweis des Vordrucks vor jedem Ventil kann entfallen. Es genügt ein entsprechender Nachweis des ungünstigsten Ventils (Mindestdruckbedarf).

Es bleibt vor allem festzuhalten, dass die Regelfunktion des Thermostatkopfes nicht beeinflusst wird. Das erfindungsgemäße ausgerüstete Ventilunterteil ist auch für elektrothermische und andere Stellantriebe uneingeschränkt einsetzbar. Für geringe Durchflussmengen sind wie bisher unterschiedliche Ventileinsätze empfehlenswert, d.h., der Sitzdurchmesser oder Ventilkegel ist aus Gründen der Regelgenauigkeit der berechneten Wassermenge anzupassen (Standard-, Fein- und Feinstregelventile). Das Druckausgleichselement bleibt unverändert.

Rein wirtschaftlich gesehen ist der zusätzliche Kostenaufwand aufgrund der einfachen Konstruktion im Hinblick auf die zahlreichen erzielbaren Vorteile eher gering. Entscheidend trägt dazu bei, dass sämtliche Bauteile der erfindungsgemäßen Vorrichtung im Bereich des die Ventilspindel 6 mit Dichtsystem und die (hier nicht gezeigte) Rückholfeder aufnehmenden Oberteil des Ventilgehäuses 1 vorgesehen sind. Auch der Einsatz der erfindungsgemäßen Vorrichtung als einfacher Nachrüstsatz ist deshalb wirtschaftlich von großem Interesse.

In einem nicht näher dargestellten Ausführungsbeispiel ist die erfindungsgemäße Vorrichtung zur Mengenbegrenzung in ein Standard-Vorabsperrventil (Mischventil) für den Sanitärbereich eingebaut. Auch im Sanitärbereich lassen sich die für den Heizungsbereich zuvor beschriebenen erfindungsgemäßen Vorteile, beispielsweise bezüglich der Mengenbegrenzung auf einen konstanten Durchflusswert der Unabhängigkeit vom Vor- bzw. Differenzdruck am Mischventil, der automatischen Anpassung des kv-Wertes, der direkten Einstellung der maximalen Durchflussmenge am Ventil, des selbständigen Ausgleichs bei Änderung des Vordrucks und Vordruckschwankungen durch das Ventil, und so weiter erzielen. Der Differenzdruckbereich spielt im Sanitärbereich innerhalb der Bereichsgrenzen von ca. 300 bis 3500 mbar keine Rolle. Die Schwankungsbreite zwischen Ruhedruck und berechnetem Fliesdruck wird automatisch ausgeglichen, auch wenn diese kalt- und warmwasserseitig unterschiedlich sind. Lediglich der geodätische Druck sollte zur Eingrenzung des Differenzdruckbereichs im Sanitärbereich gleich sein. Die Ventile in der Kalt- und Warmwasserleitung sollten etwa auf gleicher Höhe sitzen. Die Druckregelvorrichtung kann sowohl in die Armatur selbst als auch in Vorabsperrventile integriert werden. Für sehr unterschiedliche Durchflussmengen empfehlen sich dabei unterschiedliche Ventileinsätze, d.h. Sitzdurchmesser oder Ventilkegel sind aus Gründen der Regelgenauigkeit der zu begrenzenden Wassermenge anzupassen. Wie im Falle des Heizungsbereichs bleibt auch im Sanitärbereich das Druckausgleichselement unverändert.

## Patentansprüche

1. Zum Einbau in ein Ventilgehäuse (1) vorgesehene Vorrichtung zur Mengenbegrenzung von einem das Ventilgehäuse (1) von einem Zulauf (2) zu einem Ablauf (3) durchströmenden Medium, insbesondere Wasser, innerhalb eines hinsichtlich Durchflussmenge und Differenzdruck vorgegebenen Arbeitsbereichs, mit einer Ventilspindel (6) und einem Ventilkegel (14), der unter Ausrichtung auf einen im Ventilgehäuse (1) vorgesehenen Ventilsitz (4) auf diesen zu- und wegbewegbar gelagert ist, und mit einer mit der Ventilspindel gekoppelten Einrichtung (11) zur Messung des Differenzdrucks, wobei die Durchflussmenge von außerhalb der Vorrichtung voreinstellbar ist und unabhängig von Vordruckschwankungen innerhalb des vorgegebenen Arbeitsbereichs auf einem konstanten Wert erfolgt, **dadurch gekennzeichnet dass** als Einrichtung zur Messung des Differenzdrucks zwischen dem, dem Ventilkegel (14) zugekehrten Ende (6a) der Ventilspindel (6) und dem Ventilkegel (14) eine diese koppelnde Kapselfeder (11) mit linearer Charakteristik vorgesehen ist und dass der Hub der Ventilspindel (6) auf den Wert der beim niedrigsten vorgesehenen Differenzdruck zulässigen Durchflussmenge begrenzt ist.

2. Vorrichtung nach Anspruch 1, **dadurch gekennzeichnet, dass** die Kapselfeder (11) zur Einstellung der zulässigen Durchflussmenge durch eine Gewindeschraube (12) mit der Ventilspindel (6.) verbunden ist.

3. Vorrichtung nach Anspruch 2, **dadurch gekennzeichnet, dass** die Steigung des Gewindes der Gewindeschraube (12) mit ca 0,5 mm so gewählt ist, dass die Einstellung der zulässigen Durchflussmenge innerhalb einer Umdrehung der Ventilspindel (6) möglich ist.

4. Vorrichtung nach Anspruch 1 bis 3, **dadurch gekennzeichnet, dass** die Kapselfeder (11) mittels eines, ihre axiale Bewegung zulassenden Anschlags (19) gegen Verdrehen gesichert ist.

5. Vorrichtung nach Anspruch 1 bis 4, **dadurch gekennzeichnet, dass** auf dem, dem Ventilsitz (4) zugekehrten Ende der Kapselfeder (11) ein axial angeordnetes Druckausgleichsrohr (13) vorgesehen ist, das durch den Ventilkegel (14) und den Ventilsitz (4) hindurchragt und den zulaufseitigen Vordruck auf die Innenseite der Kapselfeder (11) überträgt.

6. Vorrichtung nach Anspruch 5, **dadurch gekennzeichnet, dass** das Druckausgleichsrohr (13) starr an der Unterseite der Kapselfeder (11) befestigt ist.

7. Vorrichtung nach Anspruch 5 oder 6, **dadurch gekennzeichnet, dass** das Druckausgleichsrohr (13) außer einer zentralen Innenbohrung mindestens eine im wesentlichen senkrecht dazu verlaufende Druckausgleichsbohrung (15) aufweist.

8. Vorrichtung nach Anspruch 1 bis 7, **dadurch gekennzeichnet, dass** der Ventilkegel (14) weichdichtend ausgeführt und axial auf der Unterseite der Kapselfeder (11) aufgeklebt oder aufvulkanisiert ist.

9. Vorrichtung nach Anspruch 8, **dadurch gekennzeichnet, dass** der Hub auf die bei Thermostatventilen einzuhaltende Regelabweichung von 2 K, in der Regel maximal 0,44 mm, begrenzt ist.

10. Vorrichtung nach Anspruch 4 bis 9, **dadurch gekennzeichnet, dass** die Durchflussmenge des Mediums durch Verdrehen der Ventilspindel (6) an ihrem dem Ventilsitz (4) abgekehrten Ende (6b) auf einen vorgegebenen Grenzwert einstellbar ist, wobei der für die Kapselfeder (11) vorgesehene Anschlag (19) ein Mitdrehen derselben bei der Einstellung verhindert.

11. Vorrichtung nach Anspruch 10, **dadurch gekennzeichnet, dass** ein Anschlag (18) das Verdrehen der Ventilspindel (6) um mehr als eine Umdrehung, z.B. um mehr als 245 Grad verhindert.

12. Vorrichtung nach Anspruch 5 bis 11, **dadurch gekennzeichnet, dass** zur Begrenzung der Ausdehnung der Kapselfeder (11) im Inneren des Druckausgleichsrohrs (13) die mit der Kapselfeder (11) gekoppelte Gewindeschraube (12) dient, deren freies Ende über die Stirnfläche des Druckausgleichsrohrs (13) derart vorsteht, dass darauf eine gegen Verdrehen gesicherte Mutter (16) unter Anlage an der Stirnfläche des Druckausgleichsrohrs (13) befestigbar ist.

13. Vorrichtung nach Anspruch 12, **dadurch gekennzeichnet, dass** die Ausdehnung der Kapselfeder (11) auf den vorgegebenen Regelbereich, insbesondere auf den Ventilhub bei 2k Regelabweichung abzüglich einer Mindestöffnung begrenzt ist.

14. Vorrichtung nach Anspruch 12 oder 13, **dadurch gekennzeichnet, dass** es sich bei der Gewindeschraube um eine Verlängerung der die Kapselfeder (11) mit der Ventilspindel (6) verbindenden Gewindeschraube (12) handelt.

15. Vorrichtung nach Anspruch 13 oder 14, **dadurch gekennzeichnet, dass** auch bei höheren Differenzdrücken stets ein Resthub von ca. 0,1 mm sicher gestellt ist, um die Funktion des Ventils mit thermostatischem Antrieb bis zur Obergrenze des Einsatzbereichs zu gewährleisten.

16. Vorrichtung nach Anspruch 12, **dadurch gekennzeichnet, dass** die Ausdehnung der Kapselfeder (11) auf den verbleibenden Ventilhub abzüglich eines Mindestspiels von ca. 0,1 mm begrenzt ist.

17. Vorrichtung nach Anspruch 16, **dadurch gekennzeichnet, dass** die Durchflussmenge am Ventil durch Blockieren der Ventilspindel (6) von außen auf einen vorgegebenen Grenzwert einstellbar ist.

18. Vorrichtung nach einem oder mehreren der Ansprüche 1 bis 17, **dadurch gekennzeichnet, dass** sämtliche Bauteile im Bereich des die Ventilspindel (6) mit Dichtsystem und die Rückholfeder aufnehmenden, als Stopfbüchse wirkenden Oberteils des Ventilgehäuses (1) angeordnet sind.

19. Für den Heizungsbereich vorgesehenes Thermostatventil, **dadurch gekennzeichnet, dass** es zur Mengenbegrenzung eine Vorrichtung gemäß den Ansprüchen 1 bis 15 und 18 aufweist.

20. Für den Sanitärbereich vorgesehenes Vorabsperrventil, **dadurch gekennzeichnet, dass** es zu der vom Differenzdruck unabhängigen Mengenbegrenzung eine Vorrichtung gemäß den Ansprüchen 1 bis 18 aufweist.

## Claims

1. A device provided for installation in a valve housing (1) for limiting the quantity of a medium, in particular water, flowing through the valve housing (1) from an inlet (2) to an outlet (3), within a working range predetermined with regard to flow rate and differential pressure, having a valve spindle (6) and a valve cone (14), which is mounted in alignment with a valve seat (4) provided in the valve housing (1) so as to be movable towards and away from said valve seat (4), and having a means (11) coupled to the valve spindle (11) for measuring the differential pressure, the flow rate being presettable from outside the device and remaining at a constant value within the predetermined working range irrespective of admission pressure variations, **characterised in that**, as a means for measuring the differential pressure between the end (6a) of the valve spindle (6) facing the valve cone (14) and the valve cone (14), a capsule element (11) with a linear characteristic is provided which couples these together and **in that** the travel of the valve spindle (6) is limited to the value of the flow rate allowable in the case of the lowest provided differential pressure.

2. A device according to claim 1, **characterised in that**, to set the allowable flow rate, the capsule element (11) is connected to the valve spindle (6) by a screw (12).

3. A device according to claim 2, **characterised in that** the pitch of the thread of the screw (12) is selected to be approximately 0.5 mm, such that setting of the allowable flow rate can be brought about within one turn of the valve spindle (6).

4. A device according to claims 1 to 3, **characterised in that** the capsule element (11) is secured against rotation by means of a limit stop (19) allowing axial movement thereof.

5. A device according to claims 1 to 4, **characterised in that** an axially arranged pressure equalisation tube (13) is provided on the end of the capsule element (11) facing the valve seat (4), which pressure equalisation tube (13) projects through the valve cone (14) and the valve seat (4) and transmits the admission pressure on the inlet side to the inside of the capsule element (11).

6. A device according to claim 5, **characterised in that** the pressure equalisation tube (13) is attached rigidly to the bottom of the capsule element (11).

7. A device according to claims 5 or 6, **characterised in that** the pressure equalisation tube (13) comprises, in addition to a central internal bore, at least one pressure equalisation bore (15) extending substantially perpendicularly thereto.

8. A device according to claims 1 to 7, **characterised in that** the valve cone (14) is of soft-sealing construction and is adhesively bonded or vulcanised axially on the bottom of the capsule element (11).

9. A device according to claim 8, **characterised in that** the travel is limited to the control deviation of 2K to be complied with in the case of thermostatic valves, as a rule at most 0.44 mm.

10. A device according to claims 4 to 9, **characterised in that** the flow rate of the medium may be set by turning the valve spindle (6) at its end (6b) remote from the valve seat (4) to a predetermined limit value, the limit stop (19) provided for the capsule element (11) preventing the latter from co-rotating during setting.

11. A device according to claim 10, **characterised in that** a limit stop (18) prevents rotation of the valve spindle (6) by more than one turn, e.g. by more than 245 degrees.

12. A device according to claims 5 to 11, **characterised in that** the screw (12) coupled to the capsule element (11) serves to limit expansion of the capsule element (11) inside the pressure equalising tube (13), the free end of the screw (12) projecting beyond the end face of the pressure equalising tube (13) in such a way that a nut (16) secured against rotation may be attached thereto, resting against the end face of the pressure equalising tube (13).

13. A device according to claim 12, **characterised in that** the expansion of the capsule element (11) is limited to the predetermined control range, in particular to the valve travel in the case of a 2K control deviation less a minimum opening.

14. A device according to claims 12 or 13, **characterised in that** the screw comprises an extension of the screw (12) connecting the capsule element (11) to the valve spindle (6).

15. A device according to claims 13 or 14, **characterised in that**, even at relatively high differential pressures, a residual travel of approx. 0.1 mm is always ensured, in order to ensure operation of the valve with thermostatic drive up to the upper limit of the service range.

16. A device according to claim 12, **characterised in that** the expansion of the capsule element (11) is limited to the remaining valve travel less a minimum clearance of approx. 0.1 mm.

17. A device according to claim 16, **characterised in that** the flow rate at the valve may be set externally to a predetermined limit value by locking of the valve spindle (6).

18. A device according to one or more of claims 1 to 17, **characterised in that** all the components are arranged in the region of the upper part of the valve housing (1), which accommodates the valve spindle (6) with sealing system and the restoring spring and acts as a packing box.

19. A thermostatic valve provided for the heating sector, **characterised in that** it comprises a device according to claims 1 to 15 and 18 for quantity limitation.

20. A pre-shutoff valve provided for the sanitary sector, **characterised in that** it comprises a device according to claims 1 to 18 for quantity limitation irrespective of the differential pressure.

## Revendications

1. Dispositif prévu être monté dans un corps de valve (1) et destiné à limiter le débit d'un fluide, en particulier de l'eau, traversant le corps de valve (1) depuis une entrée (2) vers une sortie (3), dans un plage de travail prédéfinie en ce qui concerne le débit et la différence de pression, avec une tige de valve (6) et un cône de valve (14) qui, en étant orienté sur un siège de valve (4) prévu dans le corps de valve (1), est logé de manière à pouvoir se rapprocher et s'éloigner dudit siège, ainsi qu'avec un organe (11) couplé à la tige de valve et destiné à mesurer la différence de pression, sachant que le débit peut être préréglé depuis l'extérieur du dispositif sur une valeur constante dans la plage de travail consignée et indépendamment des fluctuations de la pression d'admission, **caractérisé en ce qu'**est prévue, comme organe pour mesurer la différence de pression entre l'extrémité (6a) de la tige de valve (6) opposée au cône de valve (14) et le cône de valve (14), une capsule (11) couplant ces derniers et présentant une caractéristique linéaire, et que la levée de la tige de valve (6) est limitée à la valeur du débit autorisé sous la plus faible différence de pression prévue.

2. Dispositif selon la revendication 1, **caractérisé en ce que** la capsule (11) pour régler le débit autorisé est reliée par une tige filetée (12) à la tige de valve (6).

3. Dispositif selon la revendication 2, **caractérisé en ce que** le pas du filet de la tige filetée (12), égal à env. 0,5 mm, est choisi de manière telle que le réglage du débit autorisé est possible sur un tour de la tige de valve (6).

4. Dispositif selon les revendications 1 à 3, **caractérisé en ce que** la capsule (11) est assurée contre la rotation au moyen d'une butée (19) lui permettant son mouvement axial.

5. Dispositif selon les revendications 1 à 4, **caractérisé en ce qu'**à l'extrémité de la capsule (11) opposée au siège de valve (4), est prévu un tube compensateur de pression (13) disposé dans le sens axial, qui traverse le cône de valve (14) et sort du siège de valve (4), et transmet la pression d'admission du côté de l'entrée à l'intérieur de la capsule (11).

6. Dispositif selon la revendication 5, **caractérisé en ce que** le tube compensateur de pression (13) est fixé de manière rigide à la face inférieure de la capsule (11).

7. Dispositif selon la revendication 5 ou 6, **caractérisé en ce que** le tube compensateur de pression (13) présente, outre un perçage intérieur central, au moins un perçage compensateur de pression (15) perpendiculaire pour l'essentiel à celui-ci.

8. Dispositif selon les revendications 1 à 7, **caractérisé en ce que** le cône de valve (14) est une garniture souple d'étanchéité collée ou fixée par vulcanisation sur la face inférieure de la capsule (11) dans le sens axial.

9. Dispositif selon la revendication 8, **caractérisé en ce que** la levée est limitée à la tolérance courante de 2 K à respecter sur les valves thermostatiques, en général 0,44 mm au maximum.

10. Dispositif selon les revendications 4 à 9, **caractérisé en ce que** le débit du fluide peut être réglé sur une valeur limite prédéfinie par rotation de la tige de valve (6) à son extrémité (6b) opposée au siège de valve (4), sachant que la butée (19) prévue pour la capsule (11) empêche une rotation simultanée de cette dernière lors du réglage.

11. Dispositif selon la revendication 10, **caractérisé en ce qu'**une butée (18) empêche une rotation de la tige de valve (6) de plus d'un tour, p. ex. de plus de 245 degrés.

12. Dispositif selon les revendications 5 à 11, **caractérisé en ce que** la tige filetée (12) couplée avec la capsule (11) à l'intérieur du tube compensateur de pression (13) sert à limiter l'extension de la capsule (11), et que l'extrémité libre de la tige filetée dépasse de la face frontale du tube compensateur de pression (13) de manière telle qu'un écrou (16) assuré contre la rotation peut y être fixé en venant s'appuyer sur la face frontale du tube compensateur de pression (13).

13. Dispositif selon la revendication 12, **caractérisé en ce que** l'extension de la capsule (11) est limitée à la plage de régulation prédéfinie, en particulier à la levée de la valve sous 2 K de tolérance courante, déduction faite d'une ouverture minimale.

14. Dispositif selon la revendication 12 ou 13, **caractérisé en ce que** la tige filetée est un prolongement de la tige filetée (12) qui relie la capsule (11) avec la tige de valve (6).

15. Dispositif selon la revendication 13 ou 14, **caractérisé en ce que**, même en présence de fortes différences de pression, une levée résiduelle d'env. 0,1 mm est constamment assurée, afin de garantir la fonction de la valve avec entraînement thermostatique jusqu'à la limite supérieure de la plage de fonctionnement.

16. Dispositif selon la revendication 12, **caractérisé en ce que** l'extension de la capsule (11) est limitée à la levée résiduelle de la valve, déduction faite d'un jeu minimal d'env. 0,1 mm.

17. Dispositif selon la revendication 16, **caractérisé en ce que** le débit dans la valve est réglable sur une valeur limite prédéfinie par blocage par l'extérieur de la tige de valve (6).

18. Dispositif selon l'une ou plusieurs des revendications 1 à 17, **caractérisé en ce que** tous les composants sont disposés dans la partie supérieure du corps de valve (1) logeant la tige de valve (6) avec système d'étanchéité et le ressort de rappel et faisant fonction de presse-garniture.

19. Valve thermostatique prévue pour le domaine du chauffage, **caractérisée en ce qu'**elle présente, pour limiter le débit, un dispositif selon les revendications 1 à 15 et 18.

20. Vanne de sectionnement amont prévue pour le domaine sanitaire, **caractérisée en ce qu'**elle présente, pour limiter le débit indépendamment de la différence de pression, un dispositif selon les revendications 1 à 18.
